# EUROPEAN PATENT SPECIFICATION

(11) **EP 1 620 666 B1**
(45) Date of publication and mention of the grant of the patent: **02.01.2008**
(21) Application number: 04729719.7
(22) Date of filing: 27.04.2004
(51) Int. Cl.: F16J 15/00, F17C 13/04, C09K 3/10

(54) **APPARATUS AND METHOD FOR FEEDING HIGH-PURITY AMMONIA GAS**
VORRICHTUNG UND VERFAHREN ZUR VERSORGUNG MIT AMMONIAKGAS
DISPOSITIF ET PROCEDE D'ALIMENTATION EN AMMONIAC GAZEUX A HAUT DEGRE DE PURETE

(30) Priority: 30.04.2003 JP 2003125508
(43) Date of publication of application: 01.02.2006
(73) Proprietor: Showa Denko K.K., Tokyo 105-8518 (JP)
(72) Inventor: TAGUCHI, H. Prod.& Tech. Cntrl DeptGases&Chem.Div, Kanagawa 2100867 (JP); KOSUGE, Y. Prod.& Tech. Cntrl DeptGases&Chem.Div, Kanagawa 2100867 (JP)
(74) Representative: Strehl Schübel-Hopf & Partner
(86) International application number: PCT/JP2004/006043
(87) International publication number: WO 2004/097287

(56) References cited:
- US-A- 2 951 721
- US-A- 5 149 105
- US-A- 5 237 001
- PATENT ABSTRACTS OF JAPAN vol. 2002, no. 12, 12 December 2002 (2002-12-12) & JP 2002 228344 A (SUMITOMO BAKELITE CO LTD), 14 August 2002 (2002-08-14)
- PATENT ABSTRACTS OF JAPAN vol. 1997, no. 06, 30 June 1997 (1997-06-30) & JP 9 032928 A (NIPPON VALQUA IND LTD), 7 February 1997 (1997-02-07)

## Description

### FIELD OF THE INVENTION

The present invention relates to an apparatus and a method for feeding a high-purity ammonia gas. More specifically, the present invention relates to an apparatus and a method for feeding a high-purity ammonia gas, which apparatus and method can maintain the purity of a high-purity ammonia gas without deterioration and decrease the contamination of a semiconductor device produced by a gas flow path constituted using a high-purity ammonia gas-feeding apparatus having excellent maintainability and safety, in feeding a high-purity ammonia gas, which is used in a semiconductor production process, to an apparatus for producing a semiconductor device.

### BACKGROUND OF THE INVENTION

The gas for use in the production of semiconductors generally includes highly corrosive halogen-base gases such as HBr and HCl, highly decomposable special gases such as SiH₄, and high-purity starting material gases containing a constituent element for film formation, such as NH₃. In a system of feeding such a gas, if a particle is produced due to impurities generated from equipment or due to corrosion, this causes contamination in the inside of the semiconductor production process system or on the product semiconductor device, giving rise to reduction in the quality or yield. Furthermore, in the case of highly decomposable gases, the gas must be fed to the use point without undergoing decomposition and moreover, since many of these gases are dangerous to human body, the gas must be inhibited to leak outside due to breakage or corrosion.

From these reasons, the material constituting the equipment for feeding various highly corrosive gases or highly decomposable special gases used in the production of semiconductors, such as cylinder valve, pressure regulator, pressure gauge, flow meter (e.g., mass flow controller), line valve and piping, is generally stainless steel 304 or 316L (VOD material) or a highly corrosion-resistant stainless steel material including a low- or ultralow-manganese material (VIM-VAM material) and a hastelloy material, such as Ni alloy and Co alloy. The material used for the sealing part of the gas-feeding apparatus is a resin, particularly a fluororesin because of its high chemical stability.

The fluororesin is chemically very stable and therefore, widely used in the semiconductor production process. Specific examples thereof include polyvinyl fluoride (PVF), polyvinylidene fluoride (PVDF), polychlorotrifluoroethylene (PCTFE), polytetrafluoroethylene (PTFE), tetrafluoroethylenehexafluoropropylene copolymer (FEP) and tetrafluoroethylene-perfluoroalkyl vinyl ether copolymer. These resins are employed for many instruments.

In the production of semiconductor devices, higher integration is acceleratingly proceeding at present. However, the apparatus for feeding such gases for use in the semiconductor production process has a problem in that a particle is produced due to corrosion only in less than one year to form a corrosion or reaction product inside the gas feeding path system and thereby the semiconductor device is contaminated. Furthermore, the sealing property of the gas-feeding apparatus deteriorates to cause gas leak and this gives rise to a problem in the safety or economics, such as interruption of the production process.

On the other hand, the high-purity ammonia gas as a starting material gas containing a constituent element for film formation is weak in the corrosiveness as compared with corrosive gases and is considered not to cause a problem of corrosion due to gas.

The metal material used at present for constituting a high-purity ammonia-feeding apparatus is a stainless steel such as SUS316L. The resin material used in general is a fluororesin, specifically, polychlorotrifluoroethylene (PCTFE) or polytetrafluoroethylene (PTFE). For example, Patent Document 1 (JP-A-6(1994)-24737) discloses an invention using a fluororesin for a filter for purifying an ammonia gas.

However, in the equipment for constituting the gas flow path of feeding a high-purity ammonia gas, an "exhaust flow phenomenon" or a phenomenon called "inner leak", where an ammonia gas flows downstream the gas flow path in the closed state, is generated and due to deterioration in the sealing property, a pressure regulator in particular has a life on the order of only from 3 to 6 months. Therefore, it is strongly demanded to enable more stable feeding of a high-purity ammonia gas over a long period of time.
[Patent Document 1] JP-A-6(1994)-24737

US-A-5 149 105, considered as closest prior art, discloses an apparatus for feeding gas comprising a sealing part comprising a halogen-free resin such as a nylon resin or a polyester resin.

### OBJECT OF THE INVENTION

It is an object of the present invention to provide a method for feeding a high-purity ammonia gas, which method comprises applying a gas-feeding apparatus including cylinder valve, pressure regulator, pressure gauge, mass flow controller, line valve and filter which apparatus is free from generation of a particle due to corrosion and does not form a corrosion or reaction product inside a gas feeding system, to a gas flow path from a gas cylinder to a semiconductor producing apparatus appropriately, and thereby realizes more safe and highly efficient stable feeding of the high-purity ammonia gas without deteriorating the purity and production of a semiconductor device having higher performance.

### SUMMARY OF THE INVENTION

The present inventors have been earnestly studied to solve the problems encountered in feeding a high-purity ammonia gas, and found that a dehalogenation reaction takes place on contacting of the high-purity ammonia gas with a fluororesin. They also found that the halogen flowed outside the resin system due to this dehalogenation reaction corrodes and damages the metal material constituting the apparatus, as a result, the cylinder valve, pressure regulator, mass flow controller, filter or line valve used for the feeding of the high-purity ammonia gas undergoes a so-called "exhaust flow phenomenon" and must be exchanged usually in a few months.

Also, the present inventors have revealed a mechanism that the corrosion product generated due to the dehalogenation phenomenon is detected not in the apparatus where the corrosion product is generated but in the inside of a device producing apparatus or a gas-feeding apparatus disposed downstream the gas flow path and therefore, the apparatus used for feeding a high-purity ammonia gas cannot provide the purity of initial feeding, as a result, contamination of a device is brought about at the end of the production process.

The present invention relates to the following (1) to (9).
(1) An apparatus for feeding a high-purity ammonia gas, comprising a sealing part and/or a gas contacting part, characterised in that the sealing part and/or gas contacting part comprises at least one halogen-free resin, selected from the group consisting of a phenol resin, a polyphenylene sulfide resin and a polyether ether ketone resin.
(2) An apparatus for feeding a high-purity ammonia gas according to (1) above, the sealing part comprising a sealing part body (8) and an abutting material (11) capable of imparting sealing property by abutting against said sealing part body (8),
   wherein said sealing part body (8) comprises the halogen-free resin, and
   at least the abutting part (11) against the sealing part body (8) of said abutting material (11) comprises a stainless steel, a cobalt alloy, a highly corrosion-resistant nickel alloy or a ceramic selected from the group consisting of alumina, aluminum nitride and silicon carbide.
(3) The apparatus for feeding a high-purity ammonia gas according to (1) or (2) above, wherein said halogen-free resin has a Rockwell surface hardness of from R30 to R150.
(4) The apparatus for feeding a high-purity ammonia gas according to any one of (1) to (3) above, which is a cylinder valve.
(5) The apparatus for feeding a high-purity ammonia gas according to any one of (1) to (3) above, which is a pressure regulator (2).
(6) The apparatus for feeding a high-purity ammonia gas according to any one of (1) to (3) above, which is a flow controller.
(7) The apparatus for feeding a high-purity ammonia gas according to any one of (1) to (3) above, which is a line filter.
(8) The apparatus for feeding a high-purity ammonia gas according to any one of (1) to (3) above, which is a line valve.
(9) A method for feeding a high-purity ammonia gas, comprising constituting a gas flow path of feeding a high-purity ammonia gas by using the high-purity ammonia gas-feeding apparatus according to any one of (4) to (8) above, and feeding a high-purity ammonia gas without deteriorating the gas purity.

### EFFECT OF THE INVENTION

According to the present invention, an appropriate resin sealant and an appropriate metal sealant are selected and used, so that a high-purity ammonia gas can be safely and stably fed without deteriorating the purity. In other words, the occurrence of a dehalogenation phenomenon can be prevented in the gas-feeding apparatus having resin sealing in view of structure, such as gas cylinder valve, flow controller (e.g., mass flow controller), pressure gauge, gas filer and line valve, and the generation of an exhaust flow phenomenon can be greatly reduced in the pressure regulator.

Furthermore, the occurrence of a dehalogenation phenomenon can also be prevented in the chamber for producing a semiconductor device or the equipment used in discharging an ammonia gas outside the apparatus from the chamber by using the present invention.

Therefore, according to the present invention, at the time of feeding a high-purity ammonia gas, the elution of halogen into the feed system due to the dehalogenation reaction can be suppressed and a corrosion product or a reaction product with halogen is not formed, so that the purity of gas can be maintained and a semiconductor device can be produced with high efficiency.

### DETAILED DESCRIPTION OF THE INVENTION

The apparatus for feeding a high-purity ammonia gas of the present invention is characterized in that the sealing part and/or the gas contacting part of the feeding apparatus comprise at least one halogen-free resin, in order to have sufficiently high durability against an ammonia gas and not cause a dehalogenation phenomenon by the ammonia gas .

Further, it is necessary to consider that apparatus needs to have corrosion resistance to a very slight amount of impurities contained in a gas fed and impurities entered inside by opening thereof to air, and that the apparatus will suffer from corrosion caused by properties inherent in the resin such as permeability and water absorption properties.

Therefore, the high purity ammonia gas feeding apparatus according to the invention has a sealing part which comprises a sealing part body and an abutting material capable of imparting the sealing property by abutting on the sealing part body, and the sealing part body comprises a halogen-free resin and the abutting material preferably has properties necessary for the ammonia gas feeding apparatus.

It is known that, in feeding ammonia gas, as the sectional area of the gas feeding part of the abutting part constituting the sealing part is very small, ammonia gas is passed through at a very high rate, or rapid change of a volume of the gas passing part induces adiabatic expansion and thereby the ammonia gas is cooled and is liquefied.

Therefore, it is necessary to select materials having steady functions in the abutting part. For example, when ammonia gas is passed through at a low flow rate and stainless steel is employed for the material, it is preferred to select austenite materials having excellent corrosion resistance such as SUS304 and SUS316L. While, when ammonia gas is passed through at a very high flow rate, it is preferred to select martensite or precipitation hardening stainless steel having excellent corrosion resistance and uniform strength such as SUS630 or SUS631.

As is clear from the above, in the ammonia gas feeding apparatus of the present invention, at least the abutting part against the sealing part body of the abutting material preferably comprises a stainless steel, a cobalt alloy, a highly corrosion-resistant nickel alloy or a ceramic selected from the group consisting of alumina, aluminum nitride and silicon carbide.

Also, the ceramic may be selected from the group consisting of tungsten carbide (WC), chromium carbide (Cr₃C₂), titanium carbide (TiC), titania (TiO₂), chromium oxide(Cr₂O₃), zirconia (ZrO₂), titanium nitride (TiN) and chromium nitride (CrN). These ceramics may be used as a mixture.

The abutting part against the sealing part body of the abutting material comprises the above-described metal material having a sufficiently high corrosion resistance to ammonia gas and the like, so that a particle, a corrosion product or reaction product cannot be generated.

The halogen-free resin for use in the present invention is selected from the group consisting of a phenol resin, a polyphenylene sulfide resin, and a polyether ether ketone resin.

By using such a resin, the dehalogenation phenomenon due to ammonia gas can be prevented and the life of the sealing part can be prolonged.

The halogen-free resin preferably has a Rockwell surface hardness of R30 to R150. When the Rockwell surface hardness is less than R30, the strength of resin tends to be insufficient. When the Rockwell surface hardness is more than R150, it tends to be difficult to maintain the airtightness since the resin becomes too hard. The Rockwell surface hardness is one of the indicator which indicates the mechanical strength of resin and can be measured by the method described in JIS K7202.

The resin used in the invention may contain a filler in order to improve the mechanical strength. Examples of the filler are not particularly limited as long as they have corrosion resistance to ammonia, and may include inorganic fillers such as magnetic powder, metal, oxide, hydroxide, silicate, carbonate, sulfate and carbons, or organic fillers.

The content of the filler varies depending to conditions such as density of the filler. It is preferred to add an proper amount of the filler within the limit of not missing the object of the invention because when a large amount of the filler is added, not only the processability is deteriorated, but also the flexibility of a resulting composition is insufficient.

By virtue of the above-described constitution of the apparatus for feeding a high-purity gas of the present invention, not only the dehalogenation phenomenon due to high-purity ammonia gas and the exhaust flow phenomenon or inner leak can be prevented but also the life of the gas-feeding apparatus can be prolonged, so that a high-purity ammonia gas can be stably fed over a long period of time.

Examples of the apparatus for feeding a high-purity ammonia gas of the present invention include a cylinder valve, a pressure regulator, a flow controller, a line filter and a line valve.

The method for feeding a high-purity ammonia gas of the present invention is characterized in that the gas flow path of feeding a high-purity ammonia gas is constituted by using the above-described high-purity ammonia gas-feeding apparatus and thereby, the high-purity ammonia gas can be stably fed to an apparatus for producing a semiconductor device without deteriorating the gas purity.

The apparatus and the method for feeding a high-purity ammonia gas of the present invention can be applied to an apparatus for producing a semiconductor device by using a high-purity ammonia gas as a starting material and also be applied to, for example, equipment used in discharging a high-purity ammonia gas.

### EXAMPLES

The present invention is described below by referring to Examples.

### [Examples 1 to 4]

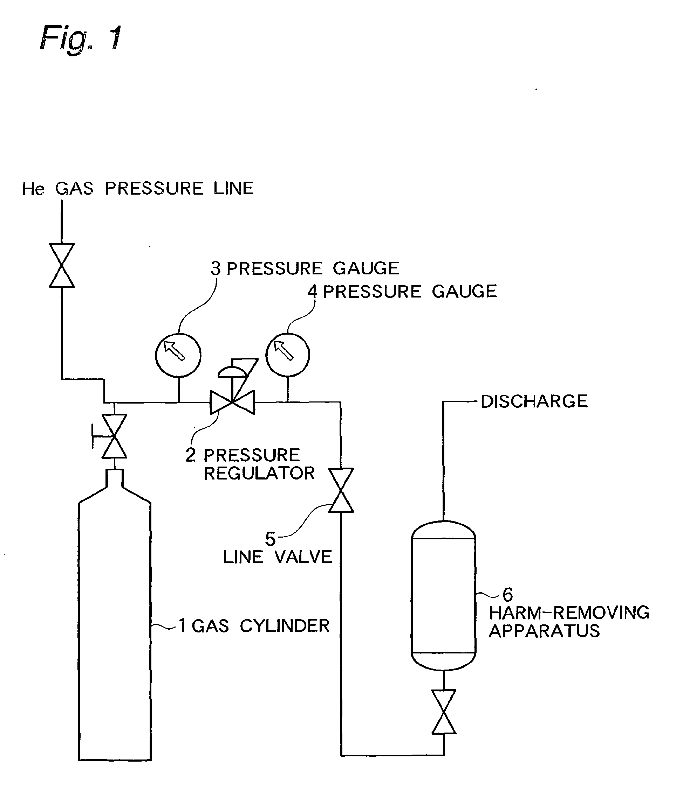

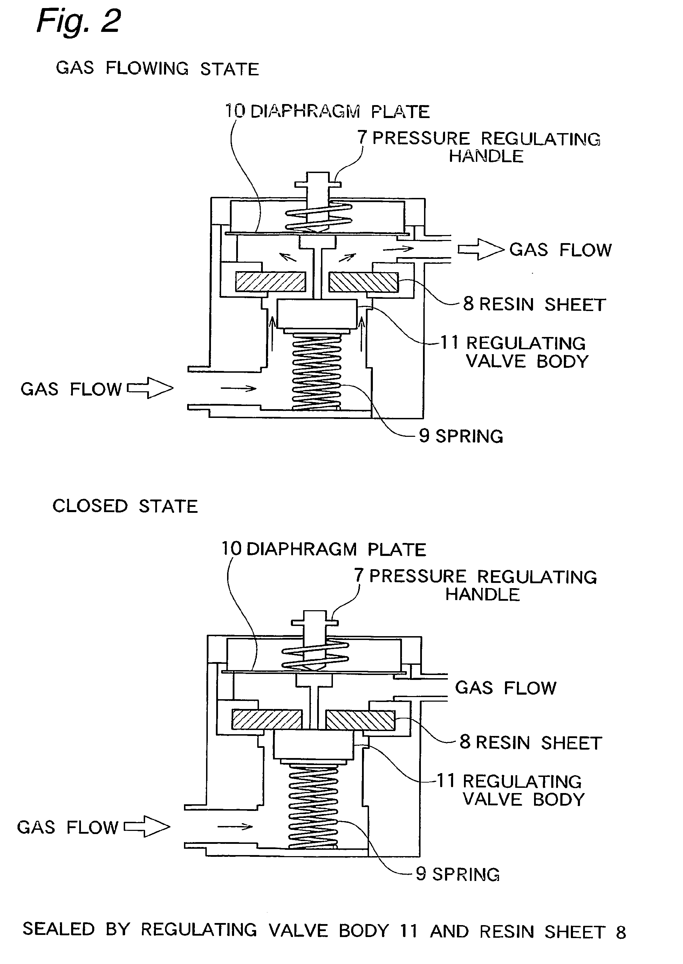

Fig. 1 shows a testing device for testing the corrosiveness of the sealing part of a gas-feeding apparatus by a high-purity ammonia gas, and the exhaust flow phenomenon or the like in the pressure regulator. As shown in Fig. 1, a gas cylinder 1 was connected with a pressure regulator 2 through piping and pressure gauges 3 and 4 were disposed before and after the pressure regulator 2 to provide a structure that the malfunction of the pressure regulator 2 can be confirmed by the change appearing in the indicated values of two pressure gauges. The gas used was recovered and treated by a gas harm-removing apparatus 6. Fig. 2 is a simplified view showing the inner structure of the pressure regulator 2 used in this Example.

The resin sealant constituting the resin sheet 8 as a sealing part body shown in Fig. 2 and the metal sealant constituting the regulating valve body 11 as an abutting material abutted against the resin sheet 8 to cut off the gas flow path are shown in Table 1. For other metal portions constituting the pressure regulator 2, stainless steel 316L was used.

The resin used for constituting the resin sheet 8 was a phenol resin in Example 1, a polyphenylene sulfide resin (PPS) in Examples 2 and 3, and a polyether ether ketone resin (PEEK) in Example 4. The metal material constituting the regulating valve body 11 was a stainless steel material (SUS316L) in Examples 1, 3 and 4 and Hastelloy C-22 in Example 2.

A gas cylinder filled with 20 kg of a high-purity ammonia gas having a purity of 6N (produced by Showa Denko K.K.) was installed in an apparatus and the apparatus itself was placed in an atmosphere of 25°C. Thereafter, the flowing of gas was continued 100 days at a flow rate of 1.0 liter/min for 5 hours/day.

### [Comparative Examples 1 and 2]

In the same manner as in Examples, as shown in Fig. 1, a gas cylinder 1 was connected with a pressure regulator 2 through piping and by providing a structure that the state of the sealing material can be judged and confirmed by the change appearing in the indicated pressure values, a test was performed. The gas used was recovered and treated by a gas harm-removing apparatus 6.

The resin sealant used for constituting the resin sheet 8 as a sealing part body in the pressure regulator 2 was a polychlorotrifluoroethylene (PCTFE) resin and the metal sealant used for constituting the regulating valve body 11 as an abutting material abutted against the resin sheet 8 to cut off the gas flow path was stainless steel 316L in Comparative Example 1 and Hastelloy C-22 in Comparative Example 2. For other metal portions constituting the pressure regulator 2, stainless steel 316L was used.

In the same manner as in Examples, a gas cylinder filled with 20 kg of a high-purity ammonia gas having a purity of 6N was installed in an apparatus and the apparatus itself was placed in an atmosphere of 25°C. Thereafter, the flowing of gas was continued 100 days at a flow rate of 1.0 liter/min for 5 hours/day.

**Table 1**

| | Resin Sheet 8 | Regulating Valve Body 11 |
|---|---|---|
| Example 1 | phenol resin | SUS316L |
| Example 2 | polyphenylene sulfide resin, PPS | Hastelloy C-22 |
| Example 3 | polyphenylene sulfide resin, PPS | SUS316L |
| Example 4 | polyether ether ketone resin, PEEK | SUS316L |
| Comparative Example 1 | polychlorotrifluoroethylene resin, PTCFE | SUS316L |
| Comparative Example 2 | polychlorotrifluoroethylene resin, PTCFE | Hastelloy C-22 |

After the completion of the flowing test of a high-purity ammonia gas for 100 days, a test of confirming the operating state of each apparatus in Examples 1 to 4 and Comparative Examples 1 and 2 was performed. In this test, the pressure regulator 2 was turned into the CLOSE state and the effectiveness of gas-sealing property (exhaust flow phenomenon) when the pressure regulator 2 was in the CLOSE state was judged from the change in the indicated values of two pressure gauges 3 and 4 disposed before and after the pressure regulator 2. More specifically, it was first confirmed that a residual gas is not present in the apparatus system and the pressure gauges 3 and 4 each indicates atmospheric pressure. Then, a helium gas pressure of 1.0 MPa was applied to the pressure gauge 3 from the gas cylinder side and after holding this state for 60 minutes, the pressure indicated by the pressure gauge 4 was recorded. The results are shown in Table 2.

**Table 2**

| | Pressure Gauge 3 (MPa) | Pressure Gauge 4 (MPa) | Judgement of Exhaust Flow Phenomenon | State of Resin (appearance) |
|---|---|---|---|---|
| Example 1 | 1.0 | 0.0 | none | no change |
| Example 2 | 1.0 | 0.0 | none | no change |
| Example 3 | 1.0 | 0.0 | none | no change |
| Example 4 | 1.0 | 0.0 | none | no change |
| Comparative Example 1 | 0.4 | 0.48 | present | changed to brown |
| Comparative Example 2 | 0.9 | 0.08 | slightly present | changed to brown |

As seen from Table 2, in the pressure regulators of Examples 1 to 4 using, as the resin sealant, a phenol resin, a polyphenylene sulfide resin or a polyether ether ketone resin, the flow of gas was closed in the CLOSE state after the completion of the test and a so-called "exhaust flow phenomenon" was not observed. On the other hand, in Comparative Examples 1 and 2, the numerical value of the pressure gauge 4 was increased and this reveals that the gas was flowing.

From comparison of Examples 1, 3 and 4 and Comparison Example 1 where SUS316L was used for the abutting material (regulating valve body 11) of the pressure regulator, the pressure regulator of Example having a sealing part body formed of a halogen-free resin was verified to have excellent durability as compared with the pressure regulator of Comparative Example 1 using a conventional halogen-containing resin.

The difference of Comparative Example 1 and Comparative Example 2 is attributable to the difference in the metal sealant constituting the abutting material of the pressure regulator 2. In both Comparative Examples, a fluororesin was used as the resin sealant for the sealing part body and an "exhaust flow phenomenon" of causing flow of gas in the downstream direction was observed from the indicated value of the pressure gauge 4. However, in the pressure regulator of Comparative Example 2 where the metal sealant constituting the abutting material abutted against the sealing part body had improved corrosion resistance, the indicated value of the pressure gauge 4 was smaller than in Comparative Example 1 and the level of "exhaust flow phenomenon" was lower. That is, the highly corrosion-resistant nickel alloy (hastelloy material) was proved to have more excellent corrosion resistance than the conventional stainless steel. Also, it was revealed that the sealing performance was deteriorated due to change in quality of the resin sealant by a dehalogenation phenomenon and the eliminated halogen affected the meal sealant.

After the completion of test, the pressure regulators used in Examples and Comparative Examples each was disassembled and the change in weight of the resin sealant taken out was investigated. The results are shown in Table 3.

**Table 3**

| | Resin Sheet 8 | Variation in Weight (mg/mm²) |
|---|---|---|
| Example 1 | phenol resin | +6.1 |
| Example 2 | polyphenylene sulfide resin, PPS | 0.0 |
| Example 3 | polyphenylene sulfide resin, PPS | 0.0 |
| Example 4 | polyether ether ketone resin, PEEK | 0.0 |
| Comparative Example 1 | polychlorotrifluoroethylene resin, PTCFE | -12 |
| Comparative Example 2 | polychlorotrifluoroethylene resin, PTCFE | -26 |

The variation in weight of the resin was a numerical value obtained by measuring the increase or decrease of weight between before and after the test and dividing the obtained value by the entire surface area of the resin seal.

It is seen from the results in Table 3 that the phenol resin of Example 1 has excellent corrosion resistance against an ammonia gas and can be used as the resin sealant, despite the increase of weight due to permeation of ammonia gas. As seen from the results of Examples 2, 3 and 4, the polyphenylene sulfide resin and polyether ether ketone resin were not changed in the weight and revealed to have excellent corrosion resistance against an ammonia gas. The weight of the PTCFE resin used in Comparative Examples 1 and 2 was decreased constantly. The fact that the numerical value of Comparative Example 1 was smaller than the numerical value of Comparative Example 2 is considered on the ground that a dark brown substance was outwardly attached on the resin measured because a corrosion product of the metal sealant corroded by dehalogenation was attached to the resin.

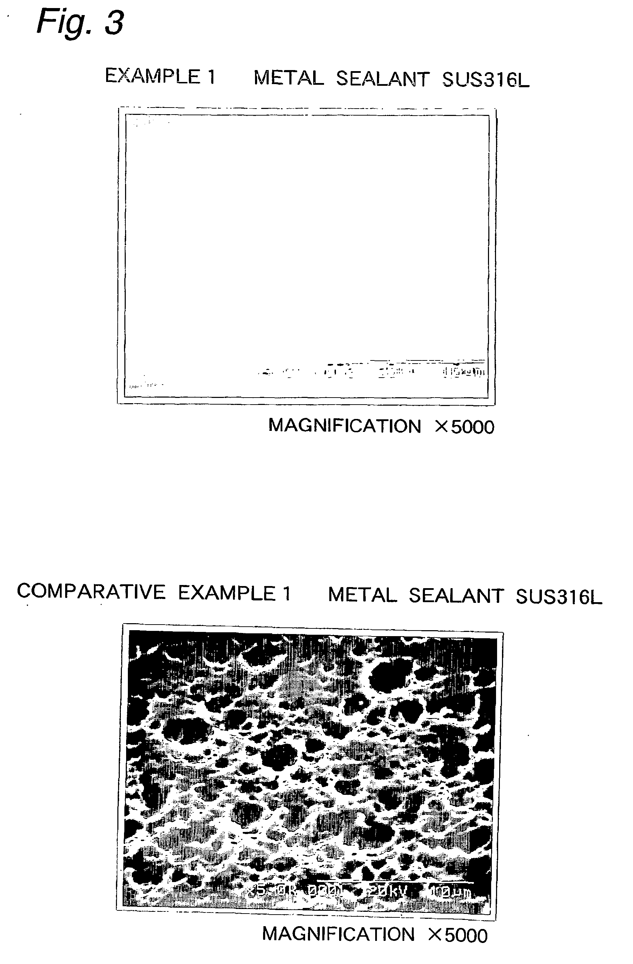

After the completion of the test, the surface of the metal sealant constituting each pressure regulator used in Example 1 and Comparative Example 1 was observed by a scanning electron microscope. The results are shown in Fig. 3.

As seen from Fig. 3, in Comparative Example 1, the halogen-containing product produced by the dehalogenation reaction between PTCFE and ammonia reacted with the metal sealant to generate serious corrosion. On the other hand, the metal sealant of Example 1 was not corroded and maintained metal gloss. As a result, the exhaust flow phenomenon was not observed at all in the pressure regulator.

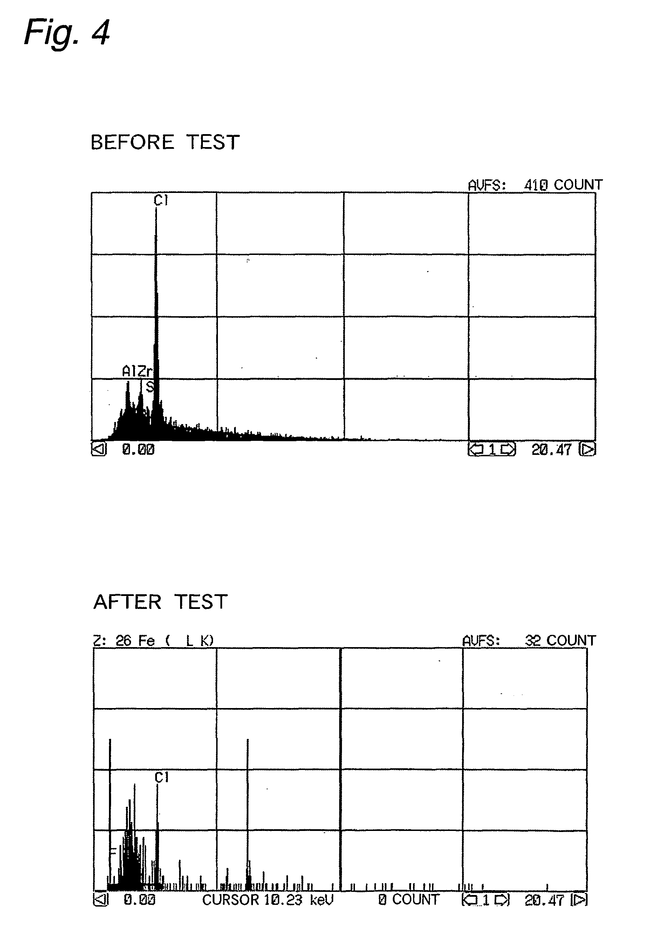

Fig. 4 shows the change in constituent elements of the resin sealant used for the pressure regulator of Comparative Example 1 after the completion of the test. The elemental analysis was preformed by an energy dispersive X-ray analyzer (EMAX, manufactured by Horiba Ltd.).

The amount of the C1 element as a constituent element of PTCFE detected before the test was 36.1 cps but decreased to 0.93 cps after the completion of the test and this reveals that the percentage of the residual amount of chlorine element in the analysis range is only 2.5%.

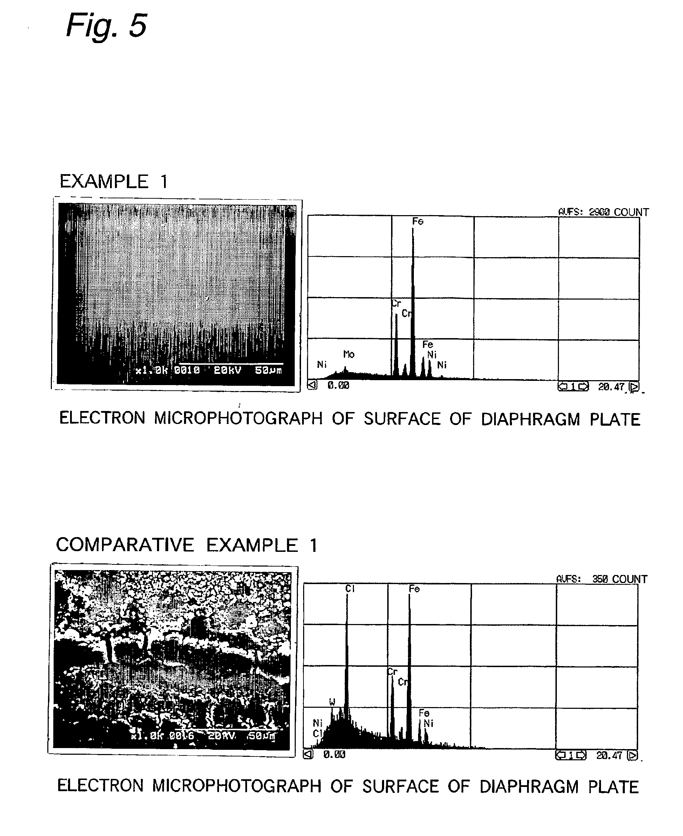

The surface of each diaphragm plate constituting the diaphragm valve (line valve 5) provided downstream the gas flow path from the pressure gauge 4 used in Example 1 and Comparative Example 1 was observed by an electron microscope after the completion of the test and the presence or absence of reaction product and the like was inspected. Furthermore, the produced reaction product was subjected to elemental analysis by an energy dispersive X-ray analyzer. The results obtained are shown in Fig. 5.

In Example 1, formation or the like of foreign matters was not observed on the surface of the diaphragm plate of the line valve 5 and only the components of stainless steel were detected by the elemental analysis of the diaphragm plate surface. In Comparative Example 1, the observation through an electron microscope revealed that a reaction product remained or accumulated on the surface of the diaphragm plate of the line valve 5. The elements in this portion of the photograph were analyzed, as a result, a large amount of chlorine was detected in addition to the components of the stainless steel constituting the diaphragm plate.

Therefore, the corrosion product formed by the dehalogenation reaction in the pressure regulator 2 was proved to reach the downstream line valve 5 by riding on the gas flow. In Example 1, such a phenomenon was not observed and this reveals that the purity of the high-purity ammonia gas was maintained.

### BRIEF DESCRIPTION OF THE DRAWINGS

Fig. 1 shows a schematic view showing the testing device used in Examples.
Fig. 2 shows a schematic view showing the inner structure of the pressure regulator used in Examples.
Fig. 3 shows electron microphotographs of the surface of the metal sealant constituting the pressure regulator after the gas flow test.
Fig. 4 shows charts showing constituent elements of the resin sealant constituting the pressure regulator before and after the gas flow test.
Fig. 5 shows electron microphotographs of the surface of the diaphragm plate constituting the line valve 5 after the gas flow test and charts showing the elemental analysis results.

### [Description of Reference Numerals]

- 1: gas cylinder
- 2: pressure regulator
- 3: pressure gauge for inlet gas of pressure regulator
- 4: pressure gauge for outlet gas of pressure regulator
- 5: line valve
- 6: gas harm-removing apparatus
- 7: pressure regulating shaft
- 8: resin sheet
- 9: spring
- 10: diaphragm plate
- 11: regulating valve body

## Claims

1. An apparatus for feeding a high-purity ammonia gas, comprising a sealing part and/or a gas contacting part, **characterised in that** the sealing part and/or gas contacting part comprises at least one halogen-free resin, selected from the group consisting of a phenol resin, a polyphenylene sulfide resin and a polyether ether ketone resin.

2. An apparatus for feeding a high-purity ammonia gas according to claim 1, the sealing part comprising a sealing part body (8) and an abutting material (11) capable of imparting sealing property by abutting against said sealing part body (8),
wherein said sealing part body (8) comprises the halogen-free resin, and
at least the abutting part (11) against the sealing part body (8) of said abutting material (11) comprises a stainless steel, a cobalt alloy, a highly corrosion-resistant nickel alloy or a ceramic selected from the group consisting of alumina, aluminum nitride and silicon carbide.

3. The apparatus for feeding a high-purity ammonia gas as claimed in claim 1 or 2, wherein said halogen-free resin has a Rockwell surface hardness of from R30 to R150.

4. The apparatus for feeding a high-purity ammonia gas as claimed in any one of claims 1 to 3, which is a cylinder valve.

5. The apparatus for feeding a high-purity ammonia gas as claimed in any one of claims 1 to 3, which is a pressure regulator (2)..

6. The apparatus for feeding a high-purity ammonia gas as claimed in any one of claims 1 to 3, which is a flow controller.

7. The apparatus for feeding a high-purity ammonia gas as claimed in any one of claims 1 to 3, which is a line filter.

8. The apparatus for feeding a high-purity ammonia gas as claimed in any one of claims 1 to 3, which is a line valve.

9. A method for feeding a high-purity ammonia gas, comprising constituting a gas flow path of feeding a high-purity ammonia gas by using the high-purity ammonia gas-feeding apparatus as claimed in any one of claims 4 to 8, and feeding a high-purity ammonia gas without deteriorating the gas purity.

## Patentansprüche

1. Vorrichtung zum Zuführen eines hochreinen Ammoniakgases, mit einem Dichtungsteil und/oder einem Gaskontaktteil, **dadurch gekennzeichnet, dass** das Dichtungsteil und/oder das Gaskontaktteil mindestens ein halogenfreies Harz enthält/enthalten, das aus der Gruppe ausgewählt ist, bestehend aus einem Phenolharz, einem Polyphenylensulfidharz und einem Polyetheretherketonharz.

2. Vorrichtung zum Zuführen eines hochreinen Ammoniakgases nach Anspruch 1, wobei das Dichtungsteil einen Dichtungsteilkörper (8) und ein anstoßendes Material (11) umfasst, das befähigt ist, eine Dichteigenschaft zu verleihen, indem es gegen den Dichtungsteilkörper (8) anstößt,
worin der Dichtungsteilkörper (8) das halogenfreie Harz umfasst, und
zumindest der gegen den Dichtungsteilkörper (8) anstoßende Teil (11) des anstoßenden Materials (11) einen rostfreien Stahl, eine Kobaltlegierung, eine hochgradig korrosionsbeständige Nickellegierung oder eine Keramik, ausgewählt aus der Gruppe, bestehend aus Aluminiumoxid, Aluminiumnitrid und Siliciumcarbid, aufweist.

3. Vorrichtung zum Zuführen eines hochreinen Ammoniakgases nach Anspruch 1 oder 2, worin das halogenfreie Harz eine Rockwell-Oberflächenhärte von R30 bis R150 aufweist.

4. Vorrichtung zum Zuführen eines hochreinen Ammoniakgases nach einem der Ansprüche 1 bis 3, wobei es sich um ein Zylinderventil handelt.

5. Vorrichtung zum Zuführen eines hochreinen Ammoniakgases nach einem der Ansprüche 1 bis 3, wobei es sich um einen Druckluftregler (2) handelt.

6. Vorrichtung zum Zuführen eines hochreinen Ammoniakgases nach einem der Ansprüche 1 bis 3, wobei es sich um einen Durchflussregler handelt.

7. Vorrichtung zum Zuführen eines hochreinen Ammoniakgases nach einem der Ansprüche 1 bis 3, wobei es sich um ein Leitungsfilter handelt.

8. Vorrichtung zum Zuführen eines hochreinen Ammoniakgases nach einem der Ansprüche 1 bis 3, wobei es sich um ein Leitungsventil handelt.

9. Verfahren zum Zuführen eines hochreinen Ammoniakgases, umfassend das Bilden eines Gasströmungswegs zum Zuführen hochreinen Ammoniakgases unter Verwendung der Zufuhrvorrichtung für hochreines Ammoniakgas nach einem der Ansprüche 4 bis 8, und Zuführen eines hochreinen Ammoniakgases, ohne die Gasreinheit nachteilig zu beeinflussen.

## Revendications

1. Appareil d'alimentation en ammoniac gazeux de pureté élevée comprenant une partie de joint et/ou une partie en contact avec un gaz, **caractérisé en ce que** la partie de joint et/ou la partie en contact avec un gaz comprennent au moins une résine dépourvue d'halogène, choisie dans le groupe constitué par une résine phénolique, une résine poly(sulfure de phénylène) et une résine poly(éther éther cétone).

2. Appareil d'alimentation en ammoniac gazeux de pureté élevée selon la revendication 1, la partie de joint comprenant un corps de partie de joint (8) et un matériau en butée (11) capable de conférer une propriété d'étanchéité en butant contre ledit corps de partie de joint (8),
dans lequel ledit corps de partie de joint (8) comprend la résine dépourvue d'halogène, et
au moins une partie en butée (11) contre le corps de partie de joint (8) dudit matériau en butée (11) comprend un acier inoxydable, un alliage de cobalt, un alliage de nickel hautement résistant à la corrosion ou une céramique choisie dans le groupe constitué par l'alumine, le nitrure d'aluminium et le carbure de silicium.

3. Appareil d'alimentation en ammoniac gazeux de pureté élevée selon la revendication 1 ou 2, dans lequel ladite résine dépourvue d'halogène a une dureté de surface Rockwell de R30 à R150.

4. Appareil d'alimentation en ammoniac gazeux de pureté élevée selon l'une quelconque des revendications 1 à 3, qui est un robinet de bouteille.

5. Appareil d'alimentation en ammoniac gazeux de pureté élevée selon l'une quelconque des revendications 1 à 3, qui est un détendeur (2).

6. Appareil d'alimentation en ammoniac gazeux de pureté élevée selon l'une quelconque des revendications 1 à 3, qui est un régulateur de débit.

7. Appareil d'alimentation en ammoniac gazeux de pureté élevée selon l'une quelconque des revendications 1 à 3, qui est un filtre de ligne.

8. Appareil d'alimentation en ammoniac gazeux de pureté élevée selon l'une quelconque des revendications 1 à 3, qui est une vanne de ligne.

9. Procédé d'alimentation en ammoniac gazeux de pureté élevée comprenant la constitution d'un trajet d'écoulement de gaz ou la fourniture d'un ammoniac gazeux de pureté élevée à l'aide de l'appareil d'alimentation en ammoniac gazeux de pureté élevée selon l'une quelconque des revendications 4 à 8, et la fourniture d'un ammoniac gazeux de pureté élevée sans détérioration de la pureté de gaz.
